# EUROPÄISCHE PATENTSCHRIFT

(11) **EP 0 384 420 B1**
(45) Veröffentlichungstag und Bekanntmachung des Hinweises auf die Patenterteilung: **16.06.1993**
(21) Anmeldenummer: 90103284.7
(22) Anmeldetag: 21.02.1990
(51) Int. Cl.: D06N 7/00, B60R 13/08

(54) **Bodenverkleidung für Kraftfahrzeuge und Verfahren zur Herstellung**
Floor covering for vehicles and method for production of a floor covering
Revêtement de sol pour les véhicules et une méthode pour la fabrication du revêtement de sol

(30) Priorität: 23.02.1989 DE 3905607
(43) Veröffentlichungstag der Anmeldung: 29.08.1990
(73) Patentinhaber: Bayerische Motoren Werke Aktiengesellschaft, 80788 München (DE); Dura Tufting GmbH, D-36043 Fulda (DE)
(72) Erfinder: Czep, Franz, D-8000 München 80 (DE); Regendantz, Klaus, D-8047 Karlsfeld (DE); Böhm, Robert Roman, Dr., D-6901 Wiesenbach (DE)
(74) Vertreter: Dexheimer, Rolf

(56) Entgegenhaltungen:
- EP-A- 0 262 092
- EP-A- 0 303 948
- DE-A- 3 034 799
- DE-A- 3 104 835
- DE-U- 8 602 592
- DE-U- 8 710 216
- DE-U- 8 715 142
- GB-A- 2 056 360
- GB-A- 2 151 757
- US-A- 4 016 318

## Beschreibung

Die Erfindung betrifft eine Bodenverkleidung für Kraftfahrzeuge, deren prinzipieller Aufbau darin besteht, daß nach einer auf ein Flächengewebe genadelten bzw. getufteten Sichtfläche eine Schicht aus einem schallabsorbierenden Material folgt, das mit einer Hinterschäumung versehen ist. Ferner betrifft die Erfindung ein Verfahren zur Herstellung einer Bodenverkleidung.

Es sind bereits zwei Gruppen von Bodenverkleidungen für Fahrzeuge bekannt, wobei die eine Gruppe einen Aufbau ohne eine Schwerschicht aufweist, während in der anderen Gruppe eine Schwerschicht vorhanden ist. Das Gewicht der Schwerschicht liegt in einem Bereich von 2 bis 6 kg/m². Aufgrund dieser hohen Masse wirkt die mit einer Schwerschicht versehene Bodenverkleidung als ein Feder-Masse-System , mit dem ein relativ guter Schallschutz erreicht werden kann. Nachteilig bei dieser Art von Bodenverkleidung ist jedoch der große Herstellungs- und Montageaufwand sowie die beträchtliche Erhöhung des Fahrzeugleergewichtes. Der übrige Aufbau der Bodenverkleidung besteht sowohl bei der mit einer Schwerschicht behafteten Bodenverkleidung als auch bei der Bodenverkleidung ohne eine Schwerschicht aus einer als Teppich ausgebildeten Sichtfläche, die aus einer Trägerschicht besteht, in die durch Tuften Flor eingebracht ist bzw. Filamente eingebracht sind, wobei auf der Rückseite der Trägerschicht eine Einbindung für die Filamente aufgetragen wird. Zur Abdichtung gegen eindringendes Wasser folgt auf die Filamenteinbindung eine Abdichtschicht, auf die ein Kontaktvlies aufgebracht ist. Auf das Kontaktvlies wird eine Hinterschäumung oder Rückenbeschichtung aufgeschäumt. Damit der Schaum der Rückenbeschichtung nicht bis zur Sichtfläche durchschlägt, ist die Abdichtschicht entsprechend dicht. Die Filamenteinbindungsschicht dient neben der Einbindung ferner als Träger der Formstabilität nach der Verformung. Der Nachteil der bekannten Bodenverkleidung ohne eine Schwerschicht liegt in der nicht ausreichenden Schallschutzwirkung.

Aus der EP-A-0 303 948 ist eine Bodenverkleidung für Kraftfahrzeuge bekannt, bei der für das Flächengewebe anstelle von Vliesmaterial als Basisgewebe Filzmaterial verwendet wird, in die Tuftingnoppen eingenadelt werden. Besteht das Flächengewebe aus zwei aufeinanderliegenden Filzschichten, die über ein Bindemittel miteinander verbunden sind, so kann das zwischen den Filzschichten vorhandene Bindemittel auch zur Einbindung der Tuftingnoppen dienen. Diese Art der Befestigung der Tuftingnoppen in einem Flächengewebe hat den Nachteil, daß die in das Flächengewebe eingenadelten Tuftingnoppen nicht so stark eingebunden sind, wie dies bei einer Einbindung der Tuftingnoppen durch eine eigens dafür vorgesehene Klebeschicht der Fall ist. Bei einer Verwendung der bekannten Bodenverkleidung in einem Kraftfahrzeug führt die abriebintensive Beanspruchung der Sichtfläche dazu, daß die Tuftingnoppen innerhalb kurzer Zeit aus ihrer Befestigung gelöst werden und das in das Filz eingenadelte Flor ausfällt bzw. die eingenadelten Filamente ausfallen. Auch die Verwendung von Filz für eine in einem Fahrzeug verwendete Bodenverkleidung hat den Nachteil, daß das Filz nicht die erforderliche Festigkeit bei einer Druckbelastung, beispielsweise durch Stöckelschuhe, aufweist, so daß es zu einer Zerstörung der Sichtfläche kommen kann.

Schließlich gestaltet sich die Herstellung einer Bodenverkleidung, bei der Filz als Flächengewebe verwendet wird, relativ schwierig, da durch den dichten Aufbau des Filzes die Tuftingnadeln häufig abbrechen.

Aus der DE-A-31 04 835 ist bereits eine hinterschäumte, textile Flächenverkleidung mit einer Trägerschicht aus einem offenzelligen Kunststoff mit einem geringen Hohlraumvolumen als Träger für eine Hinterschäumung bekannt. Zur Verbesserung der Bindung der Hinterschäumung in die Trägerschicht kann eine Vliesabdeckung eingebracht werden. Ferner ist die Hinterschäumung gegen den Zutritt von Feuchtigkeit mittels einer Folienabdeckung geschützt. Beim Hinterschäumen dringt der Schaum in die Trägerschicht ein, so daß die offenen Zellen mit Schaum ausgefüllt werden, wobei die Porigkeit als auch die Dicke der Trägerschicht so gewählt ist, daß ein Durchdrücken des Schaumes bis in das textile Flächengebilde vermieden ist. Ferner kann die Trägerschicht auch von einem offenzelligen, hochgefüllten Kompaktschaum auf beispielsweise PUR-Basis gebildet sein, wodurch hervorragende Dämmwerte erzielt werden können. Die Trägerschicht dient somit zur Schalldämmung des von außen über das Bodenblech in den Fahrgastinnenraum dringenden Schalles. Durch die Füllung der Trägerschicht mit Schaum oder anderen Materialien ist die Trägerschicht nicht mehr zur Schalldämpfung des im Fahrzeuginnenraumes entstehenden Schalles wirksam. Ferner hat die bekannte Flächenverkleidung den Nachteil, daß aufgrund der Wasserundurchlässigkeit der auf der Hinterschäumung aufgebrachten Folie das von oben über die Teppichseite eingebrachte Wasser nicht abfließen kann, so daß beispielsweise im Winter aufgrund der nassen Witterung das eingebrachte Wasser in der Flächenverkleidung stehen bleibt.

Aus der DE-A-30 34 799 ist ein Teppichbodenbelag bekannt, bei dem zwischen dem Teppich und einer mit einer wasserdichten Abdeckfolie versehenen Schaumunterlage eine undurchlässige Zwischenschicht aus einem thermoplastischen Schaumkunststoff oder aus einem thermoplastischen Vollkunststoff angeordnet ist. Da die Zwischenschicht undurchlässig ist, ist die Zwischenschicht nicht mehr zur Schalldämpfung des im Fahrzeuginnenraumes entstehenden Schalles wirksam. Auf der der Schaumunterlage zugewandten Seite der Zwischensicht ist eine Lage aus einem textilen Flächengebilde, beispielsweise einem Faservlies, angeordnet, das bei Vollkunststoffrücken das Anbacken der geschmolzenen, thermoplastischen Schicht an dem Anpreßwerkzeug und den Formwerkzeugen verhindert und das als Haftvermittler zu der später angeschäumten Unterlage dient.

Aus der DE-U-87 10 216 ist ein plattenartiges Schalldämm- und Absorptionselement zur Auskleidung des Fußraumes und des Trennwandbereiches bekannt, dessen Schichtaufbau ein Feder-Massesystem bildet. Der Schichtaufbau besteht aus einem als Sichtfläche dienenden Teppichboden, an den sich eine Schaumschicht anschließt. Zwischen dieser Schaumschicht und einer am Bodenblech aufliegenden Schaumschicht befindet sich Schnittschaum, der als Haftvermittler zwischen der oberen und der unteren Schaumschicht dient. Durch das Füllen des Schnittschaumes entsteht eine Trennschicht, die eine Masse bildet. Die andere Masse kann der rückseitig geschlossene Teppichboden sein, der dann rückseitig mit einer Schwerschicht versehen ist. Die zwischen dem Teppichboden und dem Schnittschaum bzw. zwischen dem Schnittschaum und dem Bodenblech des Fahrzeuges angeordneten Schaumschichten bilden jeweils die Federn der integralen Feder-Masse-Einheit. Statt eines Schnittschaumes kann auch ein Vlieswerkstoff als Haftvermittler eingesetzt werden. Zur Vermeidung von Durchschüssen kann nur ein geschlossener Teppichboden unmittelbar mit dem Schaum in statu nascendi verbunden sein. Bei einem offenen Teppichboden erfolgt die Verbindung mit dem dann ausgehärteten Schaum über einen Kleber. In beiden Fällen ist dann die Rückseite des Teppichbodens schallundurchlässig, so daß der sich an den Teppichboden anschließende Schaum nicht zur Dämpfung des im Fahrgastinnenraumes vorherrschenden Schalles wirksam sein kann.

Aus der GB-A-20 56 360 ist ein schalldämmendes, mit einem Teppichmaterial kaschiertes Formteil zur Auskleidung des Innenraums von Kraftfahrzeugen bekannt, das eine Schaumstoffschicht aufweist, in die Zuschnitte aus verschiedenen Materialien entsprechend den jeweiligen akustischen Anforderungen der Karosserie eingebettet sind. Zu diesem Zweck werden an der Karosserie unter Betriebsbedingungen die Schallquellen und Schallsenken ermittelt. Zur speziellen Behandlung der Schallsenken eignen sich besonders die bekannten weichelastischen oder viskoelastischen Schäume sowie alle porösen und fasrigen Werkstoffe. An den Schallquellen sind Schwerschichten, wie beispielsweise gefüllte Bitumenfolie angeordnet. Die Zuschnitte sind auf dem Karosserieblech durch Klebung befestigt. Bei der Herstellung dieser bekannten Bodenverkleidung werden in den Hohlraum einer Form an den ermittelten Stellen Zuschnitte aus Schwerfolie und/oder aus Schaumstoffolie und/oder aus Bitumenfolie eingelegt und fixiert. An der dazu gegenüberliegenden Seite der Form wird ein Teppich- oder Teppichverbundmaterial eingelegt, das mit seiner Trittseite an einer Wand der Form anliegt. In den Zwischenraum wird danach die aufzuschäumende Kunststoffmischung in den Formhohlraum gedrückt und dort ausgehärtet. Damit Durchschüsse aufgrund des auftretenden Druckes vermieden werden, muß die Rückseite des Teppichs entsprechend dick sein. Diese bekannte Bodenverkleidung dient somit lediglich zur Schalldämmung des durch das Bodenblech der Karosserie übertragenen Schalles.

Aus der GB-A-2 151 757 ist eine Bodenverkleidung für Kraftfahrzeuge bekannt, deren Aufbau ebenfalls wie bei der GB-A-2 056 350 auf die vorhandenen Schallquellen und Schallsenken abgestimmt ist. Dieser Schichtaufbau besteht im wesentlichen aus einem Feder-Masse-System, wobei die federnde Schicht aus einem Vlies oder aus Papier-, Textil- oder Kunststoffolien, die ein Luftvolumen umschließen, bestehen kann. Dabei liegt die federnde Schicht an der zu isolierenden Wand an. Die sich daran anschließende, als Masse wirkende Schwerschicht kann mit einem Teppich versehen sein. Die Schwerschicht ist schallundurchlässig und damit zur Dämpfung des im Fahrzeuginnenraumes vorherrschenden Schalles unwirksam.

Aus der US-A-4 016 318 ist eine Bodenverkleidung für Kraftfahrzeuge bekannt, bei der Filamente in eine Trägerschicht aus beispielsweise Jute oder Polypropylen getuftet sind. Die Filamente werden durch eine Schicht aus einem thermoplastischen Urethanharz eingebunden. An diese Filamenteinbindung schließt sich eine Hinterschäumung an. Die Filamenteinbindung ist zur Vermeidung von Durchschüssen bei der Hinterschäumung dicht und damit schallundurchlässig. Somit ist die Filamenteinbindung zur Schalldämpfung des im Kraftfahrzeuginnenraum herrschenden Lärmes unwirksam.

Aus dem DE-U-87 15 142 ist ein Schalldämmteil zur Anordnung an der motorseitigen Oberfläche einer Fahrzeug-Stirnwand bekannt, das als ein Feder-Masse-System aufgebaut ist. Die Masse wird durch eine Schwerschicht gebildet, die zwischen zwei als Federn wirkenden Schaumschichten angeordnet ist. Sowohl die zur Trennwand hin zeigende Oberfläche als auch die zum Motor hin weisende Oberfläche des jeweiligen Schaums sind durch dünne Folien abgedeckt, die sowohl als Feuchtigkeitssperre dienen als auch in bezug auf die Dämmung des durch den Motor erzeugten Schalls akustisch wirksam sind. Für eine Schalldämpfung sind solche Folien jedoch nachteilig, da der Schall nicht in die entsprechende Schaumstoffschicht eindringen kann.

Aus der EP-A-262 092 ist ein lärmminderndes Bauteil bekannt, das um die Lärmquelle in Form einer Abdeckung oder einer Einkapselung angeordnet wird. Das Bauelement weist eine zur Lärmquelle hin weisende schallabsorbierende und ggf. wärmeisolierende Polsterschicht auf, an die sich eine schalldämmende Trägerschicht anschließt. Die Trägerschicht besteht aus einem schallundurchlässigen und steifen Material und ist beispielsweise als eine massive Platte aus einem thermoformbaren Kunststoffmaterial oder als ein Schichtaufbau aus einer Lage aus einem glasfaserverstärkten, duroplastischen Material und aus einer Lage aus einem verdichteten, duroplastischen Mischfaservlies ausgebildet. Aufgrund dieses Aufbaus kann die Trägerschicht nur schalldämmend und nicht schalldämpfend wirken.

Aufgabe der Erfindung ist es eine Bodenverkleidung für Kraftfahrzeuge zu schaffen, bei der neben einer guten Schalldämmung eine hohe Absorption der Innengeräusche erreicht wird. Ferner soll die Bodenverkleidung den Qualitätsansprüchen gerecht werden, die bei einer Bodenverkleidung für ein Kraftfahrzeug erforderlich sind. Ferner ist es Aufgabe der Erfindung ein Verfahren zur Herstellung einer Bodenverkleidung für Kraftfahrzeuge anzugeben.

Diese Aufgabe wird in bezug auf die Bodenverkleidung durch die Merkmale des Anspruchs 1 und in bezug auf das Verfahren zur Herstellung einer Bodenverkleidung für Kraftfahrzeuge durch die Merkmale des Anspruchs 5 gelöst.

Die separate Herstellung eines zu einer akustisch wirksamen Schicht verbundenen Schichtaufbaus aus mindestens einer Kunststoffschicht und einer Vliesschicht hat den Vorteil, daß die Qualität und Wirksamkeit des Schichtaufbaus einfach überprüfbar ist und somit ein hoher Schallschutz erreicht werden kann. Die Herstellung des Schichtaufbaus als Endlosware hat den Vorteil der einfacheren Lagerung und Transportierbarkeit.

Durch den Einsatz einer akustisch wirksamen Schicht zwischen der Teppichrückseite und der aufgeschäumten Rückenbeschichtung wird das Absorptionsvermögen erheblich gesteigert.

Aufgrund der Übernahme von Mehrfachfunktionen der Kunststoffschicht bzw. Schichten und der Vliesschicht bzw. Schichten der akustisch wirksamen Schicht können Arbeitsgänge eingespart werden. So kann die Kunststoffschicht akustisch wirksam sein und gleichzeitig zur Einbindung des Flors oder Filaments dienen und dadurch die Einbindungsschicht ersetzen. Ferner kann die Kunststoffschicht direkt mit der Hinterschäumung versehen werden, wodurch die Kunststoffschicht neben der akustischen Funktion eine Abdichtfunktion übernimmt und somit die Abdichtungsschicht nicht mehr benötigt wird. Auch das Vlies der akustisch wirksamen Schicht kann neben seiner akustischen Funktion eine Abdichtfunktion bei entsprechender Ausbildung übernehmen, so daß entsprechend die Abdichtschicht wegfallen kann. Darüberhinaus kann das Vlies eine Trägerfunktion haben.

Die akustisch wirksame Schicht kann neben einer Vielzahl aus akustisch offenen Kunststoffschichten und Vliesschichten in Sandwichbauweise insbesondere die folgenden Aufbauten umfassen:
1. Eine dem Teppich zugewandte Kunststoffschicht, einer nachfolgenden Vliesschicht und einer sich daran anschließenden Kunststoffschicht;
2. Eine dem Teppich zugewandte Kunststoffschicht und eine nachfolgende Vliesschicht und
3. nur aus einer Kunststoffschicht oder Vliesschicht bestehende akustisch wirksame Schicht .

Vorteilhafte Schallisolierungen ergeben sich aus den oben genannten Aufbauten, wobei durch den Wegfall oder der Beibehaltung von separaten Abdichtungsschichten und/oder Bindungsschichten aufgrund der Übernahme von Mehrfachfunktionen durch die Kunststoffschicht bzw. Vliesschicht eine Vielzahl von Kombinationsmöglichkeiten entstehen.

Die in die akustisch wirksame Schicht eingebrachte Zwischenfolie hat im allgemeinen nur eine Trägerfunktion. Die Zwischenfolie kann jedoch auch zu Abdichtungszwecken herangezogen werden.

Die Verwendung einer zusätzlicher Schwerschicht ergibt Schallisolierungen mit einem Feder-Massesystem, die gegenüber bekannten Schallisolierungen mit einer Schwerschicht ein größeres Absorptionsvermögen und ein geringeres Gewicht haben.

Durch eine geeignete Wahl des Verlegegewichtes der jeweiligen Kunststoffschicht bzw. Vliesschicht kann in einfacher Weise die Anwendungsvielfalt und damit die Anpassungsmöglichkeiten erhöht werden.

Durch das Einbringen einer wasserabstoßenden Oberfläche können die ansonsten vorgesehenen Zwischenfolien bzw. Abdichtvliese oder sonstigen Abdichtungen wegfallen.

Vorzugsweise ist die wasserabstoßende Oberfläche in der obersten Kunststoffschicht enthalten.

Insbesondere durch die Verwendung von geschäumtem Latex werden gute Absorptionswerte erreicht.

In den Ansprüchen 5 bis 8 sind vorteilhafte Verfahren zur Herstellung einer Bodenverkleidung aufgezeigt. Hemorzuheben ist, daß nach der Ausführungsform gemäß Anspruch 8 eine gute Dichtigkeit erreicht wird, obwohl die Zwischenfolie lediglich auf das Vlies eingenadelt wird.

Ausführungsformen der Erfindung werden nachstehend anhand der Zeichnungen beispielshalber beschrieben. Dabei zeigen:
- Fig. 1: einen zweilagigen Schichtaufbau in einer Schnittansicht von der Seite;
- Fig. 2: einen dreilagigen Schichtaufbau in einer Schnittansicht von der Seite;
- Fig. 3a und 3b: bekannte Bodenverkleidungen jeweils in einer Schnittansicht von der Seite;
- Fig. 4: eine Ausführungsform einer Bodenverkleidung in einer Schnittansicht von der Seite und
- Fig. 5: die mit einer Schwerschicht versehene Bodenverkleidung der Fig. 4 in einer Schnittansicht von der Seite.
- Fig. 6: die mit einer Schwerschicht versehene Bodenverkleidung der Fig. 4 in einer Schnittansicht von der Seite und
- Fig. 7: die mit einer Schwerschicht versehene Bodenverkleidung der Fig. 5 in einer Schnittansicht von der Seite.

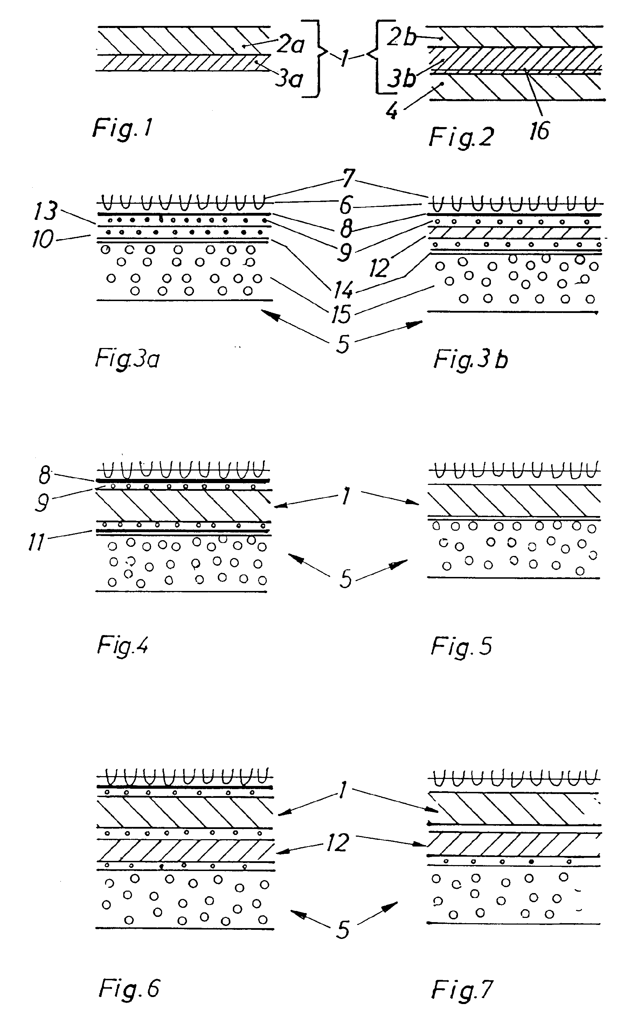

Fig. 1 zeigt einen Schichtaufbau 1, bei dem auf einem Vlies 3a ein thermoverformbarer und mindestens nach der Verformung formstabiler Kunststoff 2a aufgeschäumt ist. In der Ausführungsform gemäß der Fig. 2 weist der Schichtaufbau 1 mindestens drei Lagen auf, die aus einer auf die Oberseite eines Vlieses 3b aufgeschäumten Kunststoffschicht 2b und einer auf die Unterseite des Vlieses 3b aufgeschäumten Kunststoffschicht 4 bestehen. Zur Erhöhung der Tragfähigkeit kann eine Zwischenfolie 16 zwischen der Unterseite des Vlieses 3b und der unteren Kunststoffschicht 4 bzw. auf das Vlies 3b oder in das Vlies angeordnet sein.

In den Fig. 3a und 3b sind bereits zum Stand der Technik gehörende Bodenverkleidungen 5 dargestellt. Vom Aufbau unterscheiden sich die beiden Bodenverkleidungen 5 nur dadurch, daß bei der Bodenverkleidung 5 nach der Fig. 3a eine PE-Folie als Dichtfolie eingesetzt wird, während in der in der Fig. 3b gezeigten Bodenverkleidung 5 statt dieser Dichtfolie 13 eine Schwerschicht 12 eingebracht ist. Im Prinzip besteht die Bodenverkleidung 5 aus einer als Teppich 6, 7, 8 ausgebildeten Sichtfläche, einer sich daran anschließenden Abdichtschicht 9, 12 bzw. 13, 10 und 14 sowie einer auf die Abdichtschicht aufgeschäumten Rückenbeschichtung oder Hinterschäumung 15. Im einzelnen besteht der Teppich aus einem Trägervlies bzw. einer Trägerschicht 6 in die durch Tuften ein Flor bzw. ein Filament 7 eingebracht ist. Zur Einbindung des Filaments 7 in die Trägerschicht 6 dient eine dünne Latex- oder Hot-Melt-Schicht 8, die in einer Menge von beispielsweise 130g/m² aufgetragen ist. Auf diese Filamenteinbindung 8 folgt eine Schicht 9 aus aufgesintertem Polyäthylenpulver, auf die bei der Bodenverkleidung nach der Fig. 3a eine PE-bzw. Polyäthylenfolie 13 aufgebracht ist, während nach der Schicht 9 bei der Bodenverkleidung 5 nach der Fig. 3b eine mit Kreide oder Schwerspat gefüllte Schwerschicht 12 folgt. Anschließend ist eine weitere Polyäthylenpulverschicht 10 aufgesintert. Auf dieser Schicht ist ein Kontaktvlies 14 aufgebracht, an das sich die aufgeschäumte Rückenbeschichtung 15 anschließt. Die aus den Bestandteilen 9, 12 bzw. 13, 10 und 14 bestehende Abdichtschicht dient zur Vermeidung von Durchschüssen beim Hinterschäumvorgang zur Herstellung der Rückenbeschichtung 15. Diese Abdicht- oder Sperrschicht ist jedoch akustisch verschlossen und verhindert somit den entscheidenden Beitrag des viskoelastischen Schaums der Rückenbeschichtung 15 an der möglichen Gesamtabsorption der Bodenverkleidung. Neben dem Dämmungsverhalten und dem Körperschallisolationsvermögen ist jedoch die Absorptionseigenschaft einer Bodenverkleidung ein wichtiger Parameter für den Abbau hochfrequenter Innengeräuschanteile.

In den Fig. 4 bis 7 sind Ausführungsformen von Bodenverkleidungen 5 mit deutlich erhöhten Absorptionseigenschaften dargestellt. Wie beim Stand der Technik besteht die Sichtfläche aus einer Trägerschicht 6, in die durch Tuften der Flor bzw. das Filament 7 eingebracht ist. Beim Teppich kann es sich um Schlingen- bzw. Velourware sowie um Pol-Vlies, z.B. Dilours oder Ibolours, handeln.

In der Fig. 4 ist zur Einbindung des Filaments 6 ein Anstrich aus Hot-Melt oder Latex 8 in einer Menge von 80g/m² aufgetragen. Zum Verkleben der darauf folgenden akustisch wirksamen Schicht 1 ist PE-Pulver auf die Filamenteinbindung 8 aufgesintert. Die akustisch wirksame Schicht 1 weist beispielsweise den in Fig. 1 gezeigten Aufbau auf, der aus einem Vlies 3a in einer Menge von 200g/m² und dem thermoverformbaren, akustisch offenen Kunststoff 2a in einer Menge von 450g/m² besteht. Auf die akustisch wirksame Schicht 1 ist ein Abdichtvlies 11 in einer Menge von 80g/m² aufkaschiert. Danach folgt die Rückenbeschichtung 15. In einem Vergleich zwischen der in der Fig. 3a gezeigten Bodenverkleidung und der Bodenverkleidung 5 der Fig. 4, bei dem das Flächengewicht der Bodenverkleidung ohne die Rückenbeschichtung 15 jeweils ca. 1500g/m² betrug, hat es sich gezeigt, daß das Isolationsverhalten der Bodenverkleidung 5 gemäß der Fig. 4 bezüglich der Luftschallanregung ab ca. 400 Hz besser ist, wobei sich die hochfrequenten Geräuschanteile bis zu 4 dB reduzierten und sich der Artikulationsindex nahezu über den gesamten Drehzahlbereich bis zu 10 % verbessert hat. Wesentlichen Anteil an der Gesamtwirkung des besseren Absorptionsverhaltens hat neben dem Einsatz des thermoverformbaren, akustisch offenen Kunststoffes 2 das eingebrachte Vlies 3.

Die Bodenverkleidung 5 der Fig. 5 unterscheidet sich von der Bodenverkleidung der Fig. 4 dadurch, daß die akustisch wirksame Schicht zusätzlich zur Einbindung des Filaments 7 und ferner zur Abdichtung dient. Dies kann dadurch erreicht werden, daß statt einer 100% Absorption durch die Kunststoffschicht lediglich beispielsweise 80% Absorption erzielt werden, dafür aber der Aufbau der Kunststoffschicht um 20% dichter ist. Die akustisch wirksame Schicht 1 der Fig. 5 hat beispielsweise den Aufbau der Fig. 2, der aus einer oberen akustisch offenen Kunststoffschicht 2b, einer daran sich anschließenden Vliesschicht 3b und einer darauf folgenden akustisch offenen Kunststoffschicht 4 besteht. Beim Aufschäumen der Kunststoffschicht 2b auf die mit dem Filament 7 versehenen Trägerschicht 6 entsteht eine ausreichende Verbindung der Kunststoffschicht mit den Noppen des Filaments. In Abhängigkeit von der Tragfähigkeit der verwendeten Schichten 2b, 3b und 4, kann bei einem dünnen Schichtaufbau eine Zwischenfolie 16 auf oder innerhalb oder unterhalb der Vliesschicht 3b eingebracht sein.

In den Fig. 6 und 7 sind mit Schwerschichten 12 versehene Bodenverkleidungen 5 dargestellt, wobei die Bodenverkleidung 5 nach der Fig. 6 mit der Bodenverkleidung 5 nach der Fig. 4 im übrigen übereinstimmt und die Bodenverkleidung 5 nach der Fig. 7 im übrigen mit der Bodenverkleidung der Fig. 5 gleich ist. Die Schwerschicht 12 ist jeweils nachfolgend auf die akustisch wirksame Schicht 1 aufgebracht. Durch das Einbringen einer Schwerschicht 12 wird ein Feder-Massesystem geschaffen, das im niederfrequenten Bereich, d.h. im Bereich der Motorordnungen, verbesserte Dämmungseigenschaften im Vergleich zu Bodenverkleidungen 5 ohne eine solche Schwerschicht 12 aufweist.

Eine Vereinfachung des Aufbaus der Bodenverkleidung 5 wird dadurch erreicht, daß statt der Abdichtung 11, die ein Abdichtvlies, eine Folie oder ein geschlossenzelliger Dichtstrich sein kann, eine der Schichtoberflächen mit einer Wachsdispersion versehen ist, die wasserabstoßend ist. Beispielsweise kann die Wachsdispersion in der Rückenbeschichtung 15 enthalten sein. Möglich ist auch der separate oder zusätzliche Einsatz der Einlagerung einer Wachsdispersion in einer der Kunststoffschichten 2a; 2b und/oder 4. Vorteilhafterweise ist die Wachsdispersion in den genannten Schichten zur Bildung einer wasserabstoßenden Oberfläche jeweils in einer Menge von 2 bis 5 Gew.-% enthalten.

Der für die akustisch wirksame Schicht 1 verwendete Kunststoff 2a; 2b, 4 kann beispielsweise geschäumter Latex und/oder ein auf Melamin basierender Kunststoff und/oder Polyurethanschaum und/oder PVC-Schaum sein. Darüber hinaus sind alle weiteren Kunststoffe verwendbar, die nach einer Thermoverformung formstabil sind und die ferner zu Schaum verarbeitbar sind. Die Latexgrundlage besteht im wesentlichen aus Styrol und Butadien.

Die Herstellung des Schichtaufbaus, wie er beispielsweise in den Fig. 1 und 2 gezeigt ist, erfolgt dadurch, daß auf einer Vliesschicht 3 direkt eine Schicht aus thermoverformbaren und akustisch offenem Kunststoff 2 aufgeschäumt wird. Zur Sicherung einer gleichbleibenden Qualität wird dieser Schichtaufbau als Endlosband hergestellt. Um ein Verkleben der Schichtaufbauoberfläche im aufgerollten Zustand zu verhindern, ist auf einer Kontaktoberfläche eine lösbare Schutzfolie aufgebracht.

In dem Verfahren zur Herstellung der Bodenverkleidung entsprechend den Fig. 4 und 6 wird auf der mit dem Filament 7 versehene Trägerschichtunterseite 6, die beispielsweise ein Verlegegewicht von 450g/m² aufweisen kann, ein dünner Voranstrich 8 aus Hot-Melt oder ungeschäumtem Kunststoff, insbesondere Latex, zur Einbindung des Filaments 7 aufgetragen. Auf die Filamenteinbindung 8 wird ein aufgestreutes PE-Pulver aufgesintert. Danach erfolgt die akustisch wirksame Schicht 1. Bei der Ausführungsform einer Bodenverkleidung 5 gemäß der Fig. 6 folgt anschließend eine Schwerschicht 12, die mit anorganischen Füllstoffen gefüllt ist. Diese Füllstoffe können beispielsweise Schwerspat oder Kreide sein. Auf die akustisch wirksame Schicht 1 wird eine PE-Pulverschicht aufgesintert, auf die ein Abdichtvlies 11 folgt. Das aus den oben genannten Schichten bestehende Flächengebilde wird unter Druck- und/oder Temperatureinwirkung verformt. Die dabei hergestellte akustisch wirksame Schicht 1 ist formstabil. An das Abdichtvlies 11 schließt sich die Rückenbeschichtung 15 an, die beispielsweise Polyurethanschaum ist.

Die Herstellung von Bodenverkleidungen gemäß den Fig. 5 und 7 erfolgt dadurch, daß auf die Rückseite der mit dem Filament 7 versehenen Trägerschicht 6 eine erste Schicht des akustisch offenen Kunststoffes 2 aufgeschäumt wird. Danach folgt eine Vliesschicht 3b auf die nachfolgend eine zweite Schicht des akustisch offenen Kunststoffes 4 aufgeschäumt wird. In Abhängigkeit von der Tragfähigkeit der verwendeten Schichten 2b, 3b und 4 kann es notwendig sein, eine Zwischenfolie 16 in den Aufbau der akustisch wirksamen Schicht einzubringen. Das aus den oben genannten Schichten bestehende Flächengebilde wird unter Druck und/oder Temperatureinwirkung verformt. Anschließend wird eine Rückenbeschichtung 15 aufgeschäumt. In einer besonderen Ausführungsform wird die Zwischenfolie 16 dadurch am Vlies 3b befestigt, daß die Zwischenfolie 16 in das Vlies 3b eingenadelt wird.

Statt einem Abdichtvlies 11 kann durch Einlagerung einer Wachsdispersion eine wasserabstoßende Oberfläche geschaffen werden. Die Einlagerung der Wachsdispersion kann beispielsweise in der zur Sichtfläche zugewandten Oberfläche der Rückenbeschichtung 15 und/oder einer der Oberflächen der akustisch offenen Kunststoffschichten 2a, 2b und 4 erfolgen.

## Patentansprüche

1. Bodenverkleidung für Kraftfahrzeuge mit einer Trägerschicht (6) aus Vlies, in die Flor oder Filamente (7) durch Tuften oder Nadeln eingebracht sind, mit einer unter der Trägerschicht (6) angeordneten akustisch wirksamen Schicht (1), die aus mindestens einer Schicht aus einem thermoverformbaren, absorbierenden, zu Schaum verarbeitbaren Kunststoff oder Latex (2, 4) und aus mindestens einer Schicht aus einem Vlies (3) besteht, wobei der Flor oder die Filamente (7) durch den Schaum eingebunden sind und die akustisch wirksame Schicht (1) hinterschäumt ist, wobei entweder zwischen der akustisch wirksamen Schicht (1) und der Hinterschäumung (15) eine Abdichtung (11) und/oder eine Schwerschicht (12) angeordnet ist oder auf der akustisch wirksamen Schicht (1) eine Wachsdispersion aufgebracht ist.

2. Bodenverkleidung nach Anspruch 1, dadurch gekennzeichnet, daß auf und/oder innerhalb und/oder unterhalb der akustisch wirksamen Schicht (1) eine Zwischenfolie (16) eingebracht ist.

3. Bodenverkleidung nach den Ansprüchen 1 oder 2, dadurch gekennzeichnet, daß die Kunststoffschicht beziehungsweise Schichten (2a; 2b, 4) jeweils in einer Menge von ungefähr 150 bis 1500 g/m² und die Vliesschicht- oder Schichten (3a, 3b) jeweils in einer Menge von ungefähr 50 bis 300 g/m² in der akustisch wirksamen Schicht (1) enthalten sind.

4. Bodenverkleidung nach einem oder mehreren der vorhergehenden Ansprüche, dadurch gekennzeichnet, daß der Kunststoff (2a, 2b, 4) geschäumter Latex und/oder ein auf Melamin basierender Kunststoff und/oder Polyurethanschaum und/oder PVC-Schaum ist.

5. Verfahren zur Herstellung einer Bodenverkleidung nach einem oder mehreren der Ansprüche 1 bis 4, bei dem auf eine Trägerschicht (6) des Teppichs durch Tuften der Flor oder die Filamente (7) eingebracht werden, dadurch gekennzeichnet, daß die akustisch wirksame Schicht (1) in einzelnen Schichten direkt auf die Trägerschicht (6) aufgebracht wird, daß wahlweise auf der zur Hinterschäumung (15) zugewandten Seite der akustisch wirksamen Schicht (1) eine Abdichtung (11) aufkaschiert wird oder eine Schwerschicht (12) angeordnet wird oder auf der akustisch wirksamen Schicht (1) eine Wachsdispersion aufgebracht wird, daß das aus den oben genannten Schichten bestehende Flächengebilde unter Druck und/oder Temperatureinwirkung verformt wird.

6. Verfahren nach Anspruch 5, dadurch gekennzeichnet, daß auf die Abdichtung (11) oder auf die Schwerschicht (12) oder auf die auf der akustisch wirksamen Schicht (1) aufgebrachten Wachsdispersion eine Hinterschäumung (15) aufgeschäumt wird.

7. Verfahren nach einem der Ansprüche 5 oder 6, dadurch gekennzeichnet, daß eine Zwischenfolie (16) oberhalb oder innerhalb oder unterhalb des Vlieses (3b) eingebracht wird.

8. Verfahren nach Anspruch 7, dadurch gekennzeichnet, daß die Zwischenfolie (16) in das Vlies (3b) eingenadelt wird.

## Claims

1. A floor covering for motor vehicles having a supporting layer (6) of fleece, into which pile or filaments (7) are introduced through tufting or needling, with an acoustically effective layer (1) arranged beneath the supporting layer (6), said acoustically effective layer (1) comprising at least one layer of a thermoformable, absorbing plastic or latex (2, 4) capable of being processed to foam and at least one layer of fleece (3), whereby the pile or the filaments (7) are secured in position by the foam and the acoustically effective layer (1) is provided with a foam back-coating, wherein either a sealing layer (11) and/or a heavy layer (12) is arranged between the acoustically effective layer (1) and the foam back-coating (15) or a wax dispersion is applied to the acoustically effective layer (1).

2. A floor covering according to Claim 1, characterised in that an intermediate foil (16) is introduced on top of and/or within and/or beneath the acoustically effective layer (1).

3. A floor covering according to either Claim 1 or 2, characterised in that the one or more layers of plastic (2a, 2b, 4) each lie within weight ranges of approximately 150 to 1500 g/m² and the one or more layers of fleece (3a, 3b) each lie within a weight range of approximately 50 to 300 g/m² within the acoustically effective layer (1).

4. A floor covering according to one or more of the above Claims, characterised in that the plastic (2a, 2b, 4) is a foamed latex and/or a melamine-based plastic and/or polyurethane foam and/or PVC foam.

5. A method for the manufacture of a floor covering according to one or more of Claims 1 to 4 in which the pile or the filaments (7) are introduced into the supporting layer (6) of the carpet by tufting, characterised in that the acoustically effective layer (1) is applied directly to the supporting layer (6) in individual layers, and in that a sealing layer (11) is laminated on to that side of the acoustically effective layer (1) which faces the foam back-coating (15) or a heavy layer (12) is arranged thereupon or a wax dispersion is applied to the acoustically effective layer (1), and in that the sheet-form material comprising the above layers is formed under pressure and/or temperature.

6. A method according to Claim 5, characterised in that a foam back-coating (15) is foamed onto the wax dispersion applied to the sealing layer (11) or to the heavy layer (12) or to the acoustically effective layer (1).

7. A method according to either Claim 5 or 6, characterised in that an intermediate foil (16) is introduced above, within or beneath the fleece (3b).

8. A method according to Claim 7, characterised in that the intermediate foil (16) is needled into the fleece (3b).

## Revendications

1. Revêtement de sol pour véhicule à moteur avec une couche support (6) en non-tissé, dans laquelle sont insérés par tufting ou aiguilletage des fils ou des filaments (7), avec une couche (1) opérationnelle du point de vue acoustique disposée sous la couche support (6), qui consiste en au moins une couche en une matière plastique thermoformable, absorbante, pouvant être mise en mousse ou en latex (2, 4) et en au moins une couche en un non-tissé (3), les fils ou les filaments (7) étant enchevêtrés par la mousse et la couche opérationnelle du point de vue acoustique (1) étant mise en mousse par derrière, revêtement de sol dans lequel une garniture d'étanchéité (11) et/ou une couche lourde (12) est disposée soit entre la couche (1) opérationnelle du point de vue acoustique, soit entre la couche (1) opérationnelle du point de vue acoustique et la mousse postérieure (15) ou bien une dispersion de cire est déposée sur la couche (1) opérationnelle du point de vue acoustique.

2. Revêtement de sol selon la figure 1, caractérisé en ce qu'on insère une feuille intermédiaire (16) sur et/ou à l'intérieur et/ou en-dessous de la couche (1) opérationnelle du point de vue acoustique.

3. Revêtement de sol selon les revendications 1 ou 2, caractérisé en ce que la couche de matière plastique ou les couches de matière plastique (2a ; 2b, 4) sont contenues à raison d'environ 150 à 1500 g/m² et la couche ou les couches (3a, 3b) de non-tissé sont contenues à raison d'environ 50 à 300 g/m² dans la couche (1) opérationnelle du point de vue acoustique.

4. Revêtement de sol selon une ou plusieurs des revendications précédentes, caractérisé en ce que la matière plastique (2a, 2b, 4) est une mousse de latex et/ou une matière plastique se fondant sur la mélamine et/ou une mousse de polyuréthane et/ou de la mousse de chlorure de polyvinyle.

5. Procédé de fabrication d'un revêtement de sol selon une ou plusieurs des revendications 1 à 4, dans lequel on dépose sur une couche support (6) du tapis par tufting les fils ou les filaments (7), caractérisé en ce que la couche opérationnelle du point de vue acoustique (1) est déposée en couches individuelles directement sur la couche support (6), en ce que au choix on plaque une garniture d'étanchéité (11) sur le côté de la couche opérationnelle du point de vue acoustique (1) tournée vers la garniture de mousse postérieure (15) ou on dispose une couche lourde (12) ou on dispose une dispersion de cire sur la couche opérationnelle du point de vue acoustique (1), et en ce que le produit constitué par les couches mentionnées ci-dessus est mis en forme sous l'action de la pression et de la température.

6. Procédé selon la revendication 5, caractérisé en ce que sur la garniture d'étanchéité (11) ou sur la couche lourde (12) ou sur la dispersion de cire déposée sur la couche opérationnelle du point de vue acoustique (1), on forme une garniture postérieure de mousse (15).

7. Procédé selon l'une des revendications 5 ou 6, caractérisé en ce que l'on insère une feuille intermédiaire (16) en-dessus ou en-dessous ou à l'intérieur du non-tissé (3b).

8. Procédé selon la revendication 7, caractérisé en ce que la feuille intermédiaire (16) est aiguilletée dans le non-tissé (3b).
